# EUROPEAN PATENT APPLICATION

(11) **EP 4 654 636 A1**
(43) Date of publication of application: **26.11.2025**
(21) Application number: 23916783.6
(22) Date of filing: 19.01.2023
(51) Int. Cl.: H04W 8/24

(54) **WIRELESS COMMUNICATION METHODS, TERMINAL DEVICES AND NETWORK DEVICES**

(71) Applicant: GUANGDONG OPPO MOBILE TELECOMMUNICATIONS CORP., LTD., Dongguan, Guangdong 523860 (CN)
(72) Inventor: XING, Jinqiang, Dongguan, Guangdong 523860 (CN)
(74) Representative: RGTH
(86) International application number: PCT/CN2023/073162
(87) International publication number: WO 2024/152303

(57) **Abstract**

Provided in the present application are wireless communication methods, terminal devices, and network devices. A method comprises: a terminal device sends first indication information to a network device, the first indication information being used for indicating first information, and the first information being related to the maximum transmission power capability of the terminal device.

## Description

### TECHNICAL FIELD

This application relates to the field of communications technologies, and more specifically, to a wireless communication method, a terminal device, and a network device.

### BACKGROUND

When a network device performs uplink scheduling for a terminal device, how to accurately control a transmit power of the terminal device by the network device is to be solved.

### SUMMARY

This application provides a wireless communication method, a terminal device, and a network device. The following describes several aspects involved in embodiments of this application.

According to a first aspect, there is provided a wireless communication method. The wireless communication method includes: transmitting, by a terminal device, first indication information to a network device, where the first indication information is used to indicate first information, and the first information is related to a maximum transmit power capability of the terminal device.

According to a second aspect, there is provided a wireless communication method. The wireless communication method includes: receiving, by a network device, first indication information transmitted by a terminal device, where the first indication information is used to indicate first information, and the first information is related to a transmit power class of the terminal device.

According to a third aspect, there is provided a terminal device. The terminal device includes: a transmitting unit, configured to transmit first indication information to a network device, where the first indication information is used to indicate first information, and the first information is related to a maximum transmit power capability of the terminal device.

According to a fourth aspect, there is provided a network device. The network device includes: a receiving unit, configured to receive first indication information transmitted by a terminal device, where the first indication information is used to indicate first information, and the first information is related to a transmit power class of the terminal device.

According to a fifth aspect, there is provided a terminal device. The terminal device includes a memory, a processor, and a communications interface, where the memory is configured to store a program, and the processor is configured to invoke the program in the memory to execute the method according to the first aspect.

According to a sixth aspect, there is provided a network device. The network device includes a memory, a processor, and a communications interface, where the memory is configured to store a program, and the processor is configured to invoke the program in the memory, to execute the method according to the second aspect.

According to a seventh aspect, there is provided an apparatus. The apparatus includes a processor, configured to invoke a program from a memory to execute the method according to the first aspect.

According to an eighth aspect, there is provided an apparatus. The apparatus includes a processor, configured to invoke a program from a memory to execute the method according to the second aspect.

According to a ninth aspect, there is provided a chip. The chip includes a processor, configured to invoke a program from a memory to cause a device installed with the chip to execute the method according to the first aspect.

According to a tenth aspect, there is provided a chip. The chip includes a processor, configured to invoke a program from a memory to cause a device installed with the chip to execute the method according to the second aspect.

According to an eleventh aspect, there is provided a computer-readable storage medium, where a program is stored on the computer-readable storage medium, and the program causes a computer to execute the method according to the first aspect.

According to a twelfth aspect, there is provided a computer-readable storage medium, where a program is stored on the computer-readable storage medium, and the program causes a computer to execute the method according to the second aspect.

According to a thirteenth aspect, there is provided a computer program product. The computer program product includes a program, where the program causes a computer to execute the method according to the first aspect.

According to a fourteenth aspect, there is provided a computer program product. The computer program product includes a program, where the program causes a computer to execute the method according to the second aspect.

According to a fifteenth aspect, there is provided a computer program, where the computer program causes a computer to execute the method according to the first aspect.

According to a sixteenth aspect, there is provided a computer program, where the computer program causes a computer to execute the method according to the second aspect.

According to this application, related information of the maximum transmit power capability of the terminal device is indicated by the terminal device to the network device, such that the network device can learn a current maximum transmit power capability of the terminal device, and thus the network device can perform scheduling on the terminal device according to a transmit power that matches the maximum transmit power capability, thereby improving accuracy of controlling the transmit power of the terminal device by the network device.

### BRIEF DESCRIPTION OF DRAWINGS

FIG. 1 is a structural diagram of a communications system applicable to this application.
FIG. 2 is a schematic diagram of power classes determined by a terminal device.
FIG. 3 is a schematic flowchart of a wireless communication method according to an embodiment of this application.
FIG. 4 is a schematic block diagram of a terminal device according to an embodiment of this application.
FIG. 5 is a schematic block diagram of a network device according to an embodiment of this application.
FIG. 6 is a schematic structural diagram of an apparatus according to an embodiment of this application.

### DESCRIPTION OF EMBODIMENTS

Technical solutions in this application are described below with reference to the accompanying drawings.

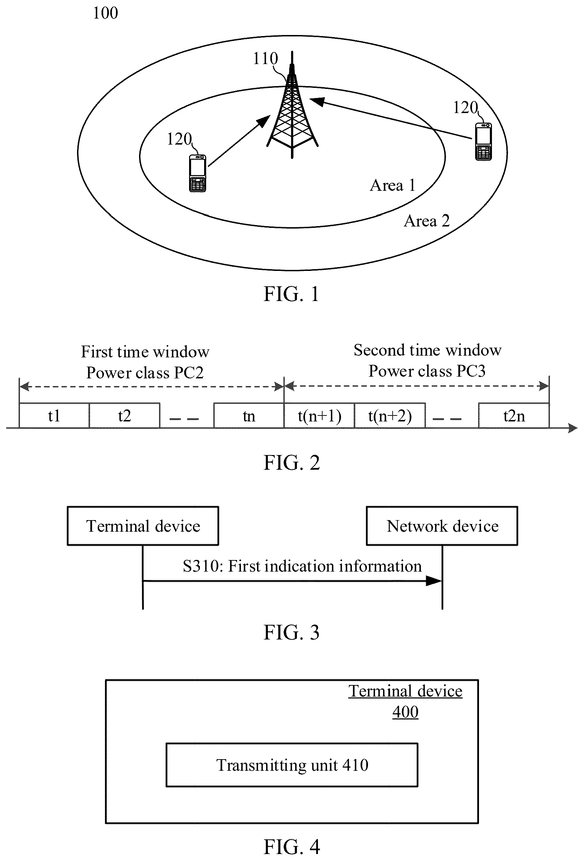

FIG. 1 shows a wireless communications system 100 to which embodiments of this application are applied. The wireless communications system 100 may include a network device 110 and terminal devices 120. The network device 110 may be a device that communicates with the terminal device 120. The network device 110 may provide communication coverage for a specific geographic area, and may communicate with the terminal device 120 located within the coverage.

FIG. 1 exemplarily shows one network device and two terminals. Optionally, the wireless communications system 100 may include a plurality of network devices, and another quantity of terminal devices may be included in coverage of each network device, which is not limited in embodiments of this application.

Optionally, the wireless communications system 100 may further include another network entity such as a network controller or a mobility management entity, which is not limited in embodiments of this application.

It should be understood that the technical solutions of embodiments of this application may be applied to various communications systems, such as a 5th generation (5th generation, 5G) system or new radio (new radio, NR), a long-term evolution (long term evolution, LTE) system, an LTE frequency division duplex (frequency division duplex, FDD) system, and an LTE time division duplex (time division duplex, TDD) system. The technical solutions provided in this application may further be applied to a future communications system, such as a 6th generation mobile communications system or a satellite communications system.

The terminal device in embodiments of this application may also be referred to as a user equipment (user equipment, UE), an access terminal, a subscriber unit, a subscriber station, a mobile site, a mobile station (mobile station, MS), a mobile terminal (mobile Terminal, MT), a remote station, a remote terminal, a mobile device, a user terminal, a terminal, a wireless communications device, a user agent, a user apparatus, or the like. The terminal device in embodiments of this application may be a device providing a user with voice and/or data connectivity and capable of connecting people, objects, and machines, such as a handheld device or a vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, the UE may be configured to function as a base station. For example, the UE may function as a scheduling entity, which provides a sidelink signal between UEs in V2X, D2D, or the like. For example, a cellular phone and a vehicle communicate with each other through a sidelink signal. A cellular phone and a smart home device communicate with each other, without relaying a communication signal through a base station.

The network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may broadly cover the following various names, or may be replaced with the following names, such as a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master eNode MeNB, a secondary eNode SeNB, a multi-standard radio (MSR) node, a home base station, a network controller, an access node, a radio node, an access point (access point, AP), a transmission node, a transceiver node, a baseband unit (baseband unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device-to-device D2D, vehicle-to-everything (vehicle-to-everything, V2X), and machine-to-machine (machine-to-machine, M2M) communications, a network-side device in a 6G network, a device that functions as a base station in a future communications system, or the like. The base station may support networks of a same access technology or different access technologies. A specific technology and a specific device used by the network device are not limited in embodiments of this application.

The base station may be stationary or mobile. For example, a helicopter or an unmanned aerial vehicle may be configured to function as a mobile base station, and one or more cells may move depending on a location of the mobile base station. In other examples, a helicopter or an unmanned aerial vehicle may be configured to function as a device in communication with another base station.

In some deployments, the network device in embodiments of this application may be a CU or a DU, or the network device includes a CU and a DU. The gNB may further include an AAU.

The network device and the terminal device may be deployed on land, including being indoors or outdoors, handheld, or vehicle-mounted, may be deployed on a water surface, or may be deployed on a plane, a balloon, or a satellite in the air. In embodiments of this application, a scenario in which the network device and the terminal device are located is not limited.

It should be understood that the communications device involved in this application may be a network device, or may be a terminal device. For example, the first communications device is a network device, and the second communications device is a terminal device. For another example, the first communications device is a terminal device, and the second communications device is a network device. For another example, both the first communications device and the second communications device are network devices, or both are terminal devices.

It should be understood that all or some of functions of the communications device in this application may also be implemented by software functions running on hardware, or by virtualization functions instantiated on a platform (for example, a cloud platform).

In the wireless communications system 100, different terminal devices are generally configured with different power classes (power class, PC), to limit a maximum transmit power of the terminal device during uplink transmission. Generally, if a maximum transmit power corresponding to a power class configured for the terminal device is relatively high, that is, the terminal device may perform uplink transmission by using a relatively high transmit power, the terminal device has relatively large uplink coverage. For example, the terminal device located in an area 2 in FIG. 1 has relatively large uplink coverage. If a maximum transmit power corresponding to a power class configured for the terminal device is relatively low, that is, the terminal device can perform uplink transmission by using only a relatively low transmit power, the terminal device has relatively small uplink coverage. For example, the terminal device located in an area 1 in FIG. 1 has relatively small uplink coverage.

For ease of understanding this application, the power class of the terminal device is described below. A power class of the terminal device may also be referred to as a transmit power class.

### PC

A maximum transmit power of the terminal device is limited by a power class. Assuming that a power class configured for the terminal device is PC 3, and a maximum transmit power corresponding to PC 3 is 23 decibels milliwatts (dBm), when the terminal device performs uplink transmission in a transmit subframe (for example, 1 ms), a maximum transmit power used cannot exceed the maximum transmit power limited by PC 3, that is, 23 dBm.

For ease of understanding, the following describes, using Table 1 as an example, a power class and a maximum transmit power corresponding to the power class.

**Table 1**

| PC 3 | PC 2 | PC 1.5 | PC 1 |
|---|---|---|---|
| 23 dBm | 26 dBm | 29 dBm | 31 dBm |

Referring to Table 1, a maximum transmit power corresponding to PC 5 is 20 dBm, a maximum transmit power corresponding to PC 3 is 23 dBm, a maximum transmit power corresponding to PC 2 is 26 dBm, a maximum transmit power corresponding to PC 1.5 is 29 dBm, and a maximum transmit power corresponding to PC 1 is 30 dBm.

Generally, a power class corresponding to a maximum transmit power exceeding 23 dBm may be referred to as a high power class. For example, PC 2, PC 1.5, PC 1, and the like may be referred to as high power classes. PC 3 and PC 5 may be referred to as low power classes. In the power classes shown in Table 1, power classes represented by PC 5, PC 3, PC 2, PC 1.5, and PC 1 are ranked in ascending order.

In some embodiments, a power class of the terminal device may represent a maximum transmit power capability of the terminal device.

It should be noted that the power class classification manner in Table 1 is merely an example. For different communications systems or different frequency bands, the power class may be classified in different manners. For example, the power class may alternatively be classified in a manner shown in Table 2.

**Table 2**

| Power class | PC 5 | PC 3 | PC 2 | PC 1.5 | PC 1 |
|---|---|---|---|---|---|
| Maximum transmit power (dBm) | 20 | 23 | 26 | 29 | 30 |

### Electromagnetic wave specific absorption rate (specific absorption rate, SAR)

In some frequency bands, such as a frequency band below 6 GHz, an SAR is an indicator parameter used for measuring intensity of electromagnetic radiation of a terminal device on a human body, so as to prevent harm to the human body caused by an electromagnetic radiation device such as a mobile phone. There are strict requirements on a limit of an SAR value of a terminal device in standards, and the SAR value of the terminal device cannot exceed an SAR threshold. The SAR is an average measured value of the terminal device within a period of time. Generally, a higher transmit power of the terminal device indicates a higher SAR value. Longer transmission duration indicates a higher SAR value. Therefore, for a terminal device with a relatively high transmit power, how to meet an SAR limit requirement is a problem to be urgently solved.

To meet the SAR limit requirement, two solutions are generally used for the terminal device. One solution is to detect a distance between the terminal device and a human body by using a device such as a distance sensor, and then reduce a transmit power by using a power back-off method when the terminal device approaches the human body, so as to prevent an SAR from exceeding the threshold. Although this method can effectively resolve the problem of the SAR exceeding the threshold, a serious power loss may be caused.

The other solution is to reduce radiation duration of a terminal. In this solution, a maximum uplink duty cycle (max uplink duty cycle) capability of a terminal is introduced. The terminal device may transmit a maximum uplink duty cycle capability to a network device, so as to indicate a maximum uplink transmission time ratio that can be supported by the terminal device when performing transmission at a maximum transmit power in a frequency band, on the premise of meeting the SAR limit requirement. When an uplink duty cycle scheduled by the network device exceeds the capability, the terminal device may lower its power class by using a power back-off method, so as to limit a transmit power of the terminal device, thereby reducing the SAR value.

As described above, to meet the SAR limit requirement and protect human safety, a maximum uplink duty cycle capability is introduced for the terminal device, that is, the terminal device can maintain a maximum uplink time ratio capability at a high transmission power class. When an uplink time ratio scheduled by the network device exceeds the maximum uplink duty cycle capability of the terminal device, the terminal device may meet the SAR limit requirement by using a power class back-off method, that is, the terminal device may perform uplink transmission at a maximum transmit power corresponding to a relatively low power class.

However, the maximum uplink duty cycle capability of the terminal device is an uplink time ratio in a time window, while a length of the time window is unknown to the network device, that is, the length of the window is independently determined by the terminal device itself. Therefore, even if the network device receives the maximum uplink duty cycle capability of the terminal device, it is difficult for the network device to control uplink transmission time of the terminal device to be always within the maximum uplink duty cycle capability by scheduling. This may cause the terminal device to lower its transmit power class at an uncertain time instant.

For example, it is assumed that a power class of the terminal device is PC 2. However, when an uplink transmission time ratio of the terminal device that is obtained for a specific time window exceeds the maximum uplink duty cycle capability, the terminal device may lower a power class corresponding to the maximum transmit power capability of the terminal device from PC 2 (26 dBm) to PC 3 (23 dBm).

FIG. 2 is used as an example. FIG. 2 shows time windows independently determined by the terminal device itself. In a first time window, if the terminal device detects that uplink transmission time scheduled by the network device does not exceed the maximum uplink duty cycle capability, the terminal device may perform transmission at a maximum transmit power corresponding to PC 2 in the first time window. In a second time window, if the terminal device detects that uplink transmission time scheduled by the network device exceeds the maximum uplink duty cycle capability, the terminal device is required to perform power back-off in the second time window, for example, the terminal device performs transmission at a maximum transmit power corresponding to PC 3.

Because the network device does not know when the terminal device performs power class back-off, there is a power difference of 3 dBm if the network device still performs transmit power scheduling on the terminal device according to a previous power class PC 2, resulting in inaccurate uplink transmit power scheduling. That is, a transmit power scheduled by the network device for the terminal device does not match a transmit power that the terminal device can actually use.

In view of this, embodiments of this application provide a wireless communication method, a terminal device, and a network device. According to this application, related information of the maximum transmit power capability of the terminal device is indicated by the terminal device to the network device, such that the network device can learn a current maximum transmit power capability of the terminal device, and thus the network device can perform scheduling on the terminal device according to a transmit power that matches the maximum transmit power capability, thereby improving accuracy of controlling the transmit power of the terminal device by the network device.

With reference to FIG. 3, the following describes a wireless communication method according to an embodiment of this application. The method shown in FIG. 3 may include step S310.

In step S310, a terminal device transmits first indication information to a network device, where the first indication information is used to indicate first information, and the first information is related to a maximum transmit power capability of the terminal device.

A manner of carrying the first indication information is not specifically limited in embodiments of this application. In an example, the first indication information may be carried in one or more of the following: a power headroom report (power headroom report, PHR), a medium access control control element (medium access control control element, MAC CE), or radio resource control (radio resource control, RRC). For example, the first indication information may be carried in a PHR. For another example, the first indication information may be carried in a MAC CE. For another example, the first indication information may be carried in RRC. The first indication information can be transmitted more flexibly by carrying the first indication information in a MAC CE and/or RRC.

The PHR may include a difference between an uplink transmission power estimated by the terminal device and a maximum transmit power of the terminal device. The terminal device may transmit the PHR to the network device, such that the network device may perform power control and scheduling on the terminal device based on the PHR.

Since the PHR carries other information of a transmit power, related information of the maximum transmit power capability is carried in the PHR. In this way, not only the maximum transmit power capability of the terminal device can be obtained by the network device, other power information can also be obtained by the network device, so that the network device can control power of the terminal device more accurately.

In some embodiments, the first indication information may be carried in a first bit field. Alternatively, the first bit field may be used to indicate the first indication information. The first bit field may also be referred to as a first information field or a first field. Different values of the first bit field may represent different first indication information. The first indication information indicated by the first bit field varies depending on a value of the first bit field. This is described in detail below with reference to specific examples.

In some embodiments, the first bit field may be a bit field in the PHR. For example, the first bit field may be a bit field newly added to the PHR, or an existing bit field in the PHR may be reused as the first bit field. In some embodiments, the first bit field may be a bit field in a MAC CE. For example, the first bit field may be a bit field newly added to the MAC CE, or an existing bit field in the MAC CE may be reused as the first bit field. In some other embodiments, the first bit field may be a bit field in the RRC. For example, the first bit field may be a bit field newly added to the RRC, or an existing bit field in the RRC may be reused as the first bit field.

The maximum transmit power capability may be a current maximum transmit power capability of the terminal device, or an actual maximum transmit power capability of the terminal device. The current maximum transmit power capability of the terminal device is indicated to the network device, such that the network device can obtain the current transmit capability of the terminal device, and can therefore perform uplink scheduling matching the maximum transmit power capability on the terminal device.

The maximum transmit power capability may be used to indicate a transmit power class of the terminal device and/or a maximum transmit power of the terminal device. In some embodiments, the first information may be related to one or more of the following information: a transmit power class corresponding to the maximum transmit power capability, or a transmit power corresponding to the maximum transmit power capability.

In some embodiments, the first information may include one or more of the following: the transmit power class corresponding to the maximum transmit power capability, a first change value of the transmit power class corresponding to the maximum transmit power capability, the transmit power corresponding to the maximum transmit power capability, or a second change value of the transmit power corresponding to the maximum transmit power capability. The transmit power corresponding to the maximum transmit power capability may also be understood as a maximum transmit power of the terminal device or a maximum transmit power configurable for the terminal device. The maximum transmit power may be a maximum transmit power corresponding to a transmit power class of the terminal device.

In some embodiments, there is a one-to-one correspondence between a value of the first bit field and the first information. For example, there is a one-to-one correspondence between a value of the first bit field and the transmit power class corresponding to the maximum transmit power capability. For another example, there is a one-to-one correspondence between a value of the first bit field and the first change value of the transmit power class corresponding to the maximum transmit power capability. For another example, there is a one-to-one correspondence between a value of the first bit field and the transmit power corresponding to the maximum transmit power capability. For another example, there is a one-to-one correspondence between a value of the first bit field and the second change value of the transmit power corresponding to the maximum transmit power capability. For another example, there is a one-to-one correspondence between a value of the first bit field and a first change range of the transmit power corresponding to the maximum transmit power capability.

For ease of description, in the following description, the transmit power class corresponding to the maximum transmit power capability is referred to as a highest transmit power class, and the transmit power corresponding to the maximum transmit power capability is referred to as a maximum transmit power.

With reference to a specific example, the following describes content included in the first information.

In some embodiments, the first information includes a transmit power class, that is, the first indication information may be used to indicate the transmit power class. The transmit power class may include one or more of the following: PC 5, PC 3, PC 2, PC 1.5, and PC 1. For example, the first indication information is carried in the first bit field. Different values of the first bit field may be used to indicate different transmit power classes.

A quantity of bits included in the first bit field is not specifically limited in embodiments of this application. The quantity of bits included in the first bit field may be a positive integer greater than or equal to 1. For example, the first bit field may include two bits. For another example, the first bit field may include three bits.

For example, the first bit field includes two bits. A correspondence between a value of the first bit field and a transmit power class may be as shown in Table 3. When the value of the first bit field is 10, a corresponding transmit power class is PC 1.5. When the value of the first bit field is 01, a corresponding transmit power class is PC 2. When the value of the first bit field is 00, a corresponding transmit power class is PC 3.

**Table 3**

| Value of the first bit field | Power class |
|---|---|
| 10 | PC 1.5 |
| 01 | PC 2 |
| 00 | PC 3 |

Table 3 is described by using three transmit power classes of PC 1.5, PC 2, and PC 3 as examples, and embodiments of this application are not limited thereto. The first bit field may alternatively be used to indicate more or fewer transmit power classes. For example, when the value of the first bit field is 11, a corresponding transmit power class is PC 5. In addition, the correspondence in Table 3 is merely an example. There may alternatively be another correspondence between the value of the first bit field and the transmit power class. This is not specifically limited in embodiments of this application.

In some embodiments, if a quantity of transmit power classes required to be indicated by the terminal device exceeds 4, the quantity of bits included in the first bit field may be greater than or equal to 3. For example, if transmit power classes required to be indicated by the terminal device include PC 5, PC 3, PC 2, PC 1.5, and PC 1, the first indication information may be represented by three bits. If the quantity of transmit power classes required to be indicated by the terminal device is less than or equal to 4, the quantity of bits included in the first bit field may be less than or equal to 2. For example, if transmit power classes required to be indicated by the terminal device include only PC 3, PC 2, PC 1.5, and PC 1, the first indication information may be represented by two bits.

In some embodiments, the first information may include the first change value of the transmit power class, that is, the first indication information may be used to indicate the first change value of the transmit power class. The first change value may be a change value of a maximum transmit power corresponding to a transmit power class. If the first change value is the change value of the maximum transmit power corresponding to the transmit power class, the first change value may be equal to the second change value. The change value of the maximum transmit power may include one or more of the following: an increase value of the maximum transmit power and/or a decrease value of the maximum transmit power.

The first change value may be determined based on one or more of the following: a maximum transmit power capability indicated by the terminal device during initial access; or a maximum transmit power capability last indicated by the terminal device. Alternatively, the first change value is a change value relative to a first transmit power capability, and the first transmit power capability includes one or more of the following: a maximum transmit power capability indicated by the terminal device during initial access; or a maximum transmit power capability last indicated by the terminal device. The maximum transmit power capability last indicated by the terminal device may refer to a maximum transmit power capability indicated by first indication information last transmitted by the terminal device.

In some embodiments, the maximum transmit power capability may be used to indicate a transmit power class and/or a maximum transmit power. For example, the first change value may be determined based on a transmit power class indicated by the terminal device during initial access. For another example, the first change value may be determined based on a maximum transmit power indicated by the terminal device during initial access. For another example, the first change value may be determined based on a transmit power class last indicated by the terminal device. For another example, the first change value may be determined based on a maximum transmit power last indicated by the terminal device.

The first change value may be a change value of a maximum transmit power corresponding to a transmit power class. For example, if the transmit power class of the terminal device changes from PC 1.5 to PC 2, the transmit power class is a decreased by 3 dBm. For another example, if the transmit power class of the terminal device changes from PC 3 to PC 1.5, the transmit power class is increased by 6 dBm.

Generally, when performing initial access, the terminal device may report the maximum transmit power capability to the network device. The maximum transmit power capability generally corresponds to a transmit power class supported by the terminal device. In a subsequent communication process, the terminal device performs power class back-off based on this.

In some embodiments, if the maximum transmit power capability reported during initial access is used as a reference, the first change value includes a decrease value of a maximum transmit power and does not include an increase value of the maximum transmit power.

For example, the first indication information is carried in the first bit field. Different values of the first bit field may be used to indicate different first change values.

A quantity of bits included in the first bit field is not specifically limited in embodiments of this application. The quantity of bits included in the first bit field may be a positive integer greater than or equal to 1. For example, the first bit field may include two bits. For another example, the first bit field may include three bits.

If the first change value is determined based on the maximum transmit power capability reported by the terminal device during initial access, all first change values are decrease values of the maximum transmit power. In this case, the first bit field may include a relatively small quantity of bits, that is, a relatively small quantity of bits may be used to represent the first indication information. Table 1 is used as an example. The decrease value of the maximum transmit power may include one or more of the following: a decrease of 2 dBm, a decrease of 3 dBm, a decrease of 5 dBm, a decrease of 6 dBm, or a decrease of 8 dBm.

For example, the first bit field includes two bits. A correspondence between a value of the first bit field and the first change value may be as shown in Table 4.

**Table 4**

| Value of the first bit field | First change value |
|---|---|
| 00 | 0 |
| 01 | Decrease of 3 dBm |
| 10 | Decrease of 6 dBm |

Assuming that a power class reported by the terminal device during initial access is PC 1.5, when a transmit power class of the terminal device decreases to PC 2, the transmit power class of the terminal device is decreased by 3 dBm, that is, the first change value is a decrease of 3 dBm. Then, the first indication information may be represented by a bit 01. When the transmit power class of the terminal device decreases to PC 3, the transmit power class of the terminal device is decreased by 6 dBm, that is, the first change value is a decrease of 6 dBm. Then, the first indication information may be represented by a bit 10. When the transmit power class of the terminal device is the same as the transmit power class during the initial access, that is, the first change value is 0, the first indication information may be represented by a bit 00.

In some embodiments, if the transmit power class of the terminal device is the same as the transmit power class during the initial access, a default indication manner may be used, for example, the terminal device does not indicate the first change value to the network device.

Table 4 shows only one correspondence between the value of the first bit field and the first change value, and embodiments of this application are not limited thereto. For example, the first bit field may alternatively include more values to indicate more first change values. For another example, the first bit field may alternatively include fewer values to indicate fewer first change values. In addition, the correspondence between the value of the first bit field and the first change value shown in Table 4 is merely an example. There may alternatively be another correspondence between the value of the first bit field and the first change value. For example, when the value of the first bit field is 00, it indicates that the first change value is a decrease of 3 dBm. When the value of the first bit field is 01, it indicates that the first change value is a decrease of 6 dBm. When the value of the first bit field is 10, it indicates that the first change value is 0.

In some embodiments, if the maximum transmit power capability last reported by the terminal device is used as a reference, the first change value includes a decrease value of a maximum transmit power and/or an increase value of a maximum transmit power.

For example, the first indication information is carried in the first bit field. Different values of the first bit field may be used to indicate different first change values.

A quantity of bits included in the first bit field is not specifically limited in embodiments of this application. The quantity of bits included in the first bit field may be a positive integer greater than or equal to 1. For example, the first bit field may include two bits. For another example, the first bit field may include three bits.

If the first change value is determined based on the maximum transmit power capability last reported by the terminal device, the first change value may include a decrease value of a maximum transmit power and an increase value of the maximum transmit power, and the first bit field may include more bits, that is, more bits may be used to represent the first indication information. Table 1 is used as an example. The first change value may include one or more of the following: a decrease of 2 dBm, a decrease of 3 dBm, a decrease of 5 dBm, a decrease of 6 dBm, a decrease of 8 dBm, an increase of 2 dBm, an increase of 3 dBm, an increase of 5 dBm, an increase of 6 dBm, or an increase of 8 dBm.

For example, the first bit field includes three bits. A correspondence between a value of the first bit field and the first change value may be as shown in Table 5.

**Table 5**

| Value of the first bit field | First change value |
|---|---|
| 000 | 0 |
| 001 | Decrease of 3 dBm |
| 010 | Decrease of 6 dBm |
| 011 | Increase of 3 dB |
| 100 | Increase of 6 dB |

Assuming that the transmit power class last reported by the terminal device is PC 1.5, when the transmit power class of the terminal device decreases to PC 2, the transmit power class of the terminal device is decreased by 3 dBm, that is, the first change value is a decrease of 3 dBm. Then, the first indication information may be represented by a bit 001. When the transmit power class of the terminal device changes from PC 1.5 to PC 3, the transmit power class of the terminal device is decreased by 6 dBm, that is, the first change value is a decrease of 6 dBm. Then, the first indication information may be represented by a bit 010. When the transmit power class of the terminal device is increased from PC 3 to PC 2, the transmit power class of the terminal device is increased by 3 dB, that is, the first change value is an increase of 3 dBm. Then, the first indication information may be represented by a bit 011. When the transmit power class of the terminal device is increased from PC 3 to PC 1.5, the transmit power class of the terminal device is increased by 6 dBm, that is, the first change value is an increase of 6 dBm. Then, the first indication information may be represented by a bit 100. When the transmit power class of the terminal device is the same as the transmit power class last reported, that is, the first change value is 0, the first indication information may be represented by a bit 000.

In some embodiments, if the transmit power class of the terminal device is the same as the transmit power class last reported, a default indication manner may be used, for example, the terminal device does not indicate the first change value to the network device.

Table 5 shows only one correspondence between the value of the first bit field and the first change value, and embodiments of this application are not limited thereto. For example, the first bit field may alternatively include more values to indicate more first change values. For another example, the first bit field may alternatively include fewer values to indicate fewer first change values. In addition, the correspondence between the value of the first bit field and the first change value shown in Table 5 is merely an example. There may alternatively be another correspondence between the value of the first bit field and the first change value. For example, when the value of the first bit field is 000, it indicates that the first change value is decrease of 3 dBm. When the value of the first bit field is 001, it indicates that the first change value is a decrease of 6 dBm. When the value of the first bit field is 010, it indicates that the first change value is an increase of 3 dBm. When the value of the first bit field is 100, it indicates that the first change value is an increase of 6 dBm. When the value of the first bit field is 101, it indicates that the first change value is 0.

In some embodiments, the first information may include a maximum transmit power, that is, the first indication information may be used to indicate the maximum transmit power. The maximum transmit power may be a maximum transmit power corresponding to a transmit power class of the terminal device. Table 1 is used as an example. The maximum transmit power may include, for example, one or more of the following: 23 dBm, 26 dBm, 29 dBm, or 31 dBm. For example, the first indication information is carried in the first bit field. Different values of the first bit field may be used to indicate different maximum transmit powers.

A quantity of bits included in the first bit field is not specifically limited in embodiments of this application. The quantity of bits included in the first bit field may be a positive integer greater than or equal to 1. For example, the first bit field may include two bits. For another example, the first bit field may include three bits.

For example, the first bit field includes two bits. A correspondence between a value of the first bit field and a maximum transmit power may be as shown in Table 6. When the value of the first bit field is 10, a corresponding maximum transmit power is 29 dBm. When the value of the first bit field is 01, a corresponding maximum transmit power is 26 dBm. When the value of the first bit field is 00, a corresponding maximum transmit power is 23 dBm.

**Table 6**

| Value of the first bit field | Maximum transmit power |
|---|---|
| 10 | 29 dBm |
| 01 | 26 dBm |
| 00 | 23 dBm |

Table 6 is described by using three maximum transmit power classes of 29 dBm, 26 dBm, and 23 dBm as examples, and embodiments of this application are not limited thereto. The first bit field may alternatively be used to indicate more or fewer maximum transmit powers. For example, when the value of the first bit field is 11, a corresponding maximum transmit power is 31dBm. In addition, the correspondence in Table 6 is merely an example. There may alternatively be another correspondence between the value of the first bit field and the maximum transmit power. This is not specifically limited in embodiments of this application. For example, when the value of the first bit field is 10, a corresponding maximum transmit power is 23 dBm. When the value of the first bit field is 01, a corresponding maximum transmit power is 26 dBm. When the value of the first bit field is 00, a corresponding maximum transmit power is 29 dBm.

In some embodiments, if a quantity of maximum transmit powers required to be indicated by the terminal device exceeds 4, the quantity of bits included in the first bit field may be greater than or equal to 3. For example, Table 2 is used as an example. If maximum transmit powers required to be indicated by the terminal device include 20 dBm, 23 dBm, 26 dBm, 29dBm, and 30 dBm, the first indication information may be represented by three bits. If the quantity of maximum transmit powers required to be indicated by the terminal device is less than or equal to 4, the quantity of bits included in the first bit field may be less than or equal to 2. For example, Table 1 is used as an example. If maximum transmit powers required to be indicated by the terminal device include 23 dBm, 26 dBm, 29 dBm, and 31 dBm, the first indication information may be represented by two bits.

In some embodiments, the first information may include a second change value of the maximum transmit power, that is, the first indication information may be used to indicate the second change value of the maximum transmit power. In some embodiments, the second change value is equal to the first change value, and both the first change value and the second change value are change values of the maximum transmit power. The change value of the maximum transmit power may include one or more of the following: an increase value of the maximum transmit power and/or a decrease value of the maximum transmit power.

The second change value may be determined based on one or more of the following: a maximum transmit power capability indicated by the terminal device during initial access; or a maximum transmit power capability last indicated by the terminal device. Alternatively, the second change value is a change value relative to a first transmit power capability, and the first transmit power capability includes one or more of the following: a maximum transmit power capability indicated by the terminal device during initial access; or a maximum transmit power capability last indicated by the terminal device. The maximum transmit power capability last indicated by the terminal device may refer to a maximum transmit power capability indicated by first indication information last transmitted by the terminal device.

In some embodiments, the maximum transmit power capability may be used to indicate a transmit power class and/or a maximum transmit power. For example, the second change value may be determined based on a transmit power class indicated by the terminal device during initial access. For another example, the second change value may be determined based on a maximum transmit power indicated by the terminal device during initial access. For another example, the second change value may be determined based on a transmit power class last indicated by the terminal device. For another example, the second change value may be determined based on a maximum transmit power last indicated by the terminal device. It may be learned from Table 1 and Table 2 that each transmit power class may correspond to a maximum transmit power. Therefore, the terminal device may determine, based on the transmit power class, a maximum transmit power corresponding to the transmit power class, so that the second change value may be determined.

The second change value may be a change value of the maximum transmit power. For example, if the maximum transmit power of the terminal device changes from 29 dBm to 26 dBm, the second change value is a decrease of 3 dBm. For another example, if the maximum transmit power of the terminal device changes from 23 dBm to 29 dBm, the second change value is an increase of 6 dBm.

Generally, when performing initial access, the terminal device may report the maximum transmit power capability to the network device. The maximum transmit power capability generally corresponds to a maximum transmit power supported by the terminal device. In a subsequent communication process, the terminal device performs power class back-off based on this.

In some embodiments, if the maximum transmit power capability reported during initial access is used as a reference, the second change value includes a decrease value of a maximum transmit power and does not include an increase value of the maximum transmit power.

For example, the first indication information is carried in the first bit field. Different values of the first bit field may be used to indicate different second change values.

A quantity of bits included in the first bit field is not specifically limited in embodiments of this application. The quantity of bits included in the first bit field may be a positive integer greater than or equal to 1. For example, the first bit field may include two bits. For another example, the first bit field may include three bits.

If the second change value is determined based on the maximum transmit power capability reported by the terminal device during initial access, all second change values are decrease values of the maximum transmit power. The first bit field may include a relatively small quantity of bits, that is, a relatively small quantity of bits may be used to represent the first indication information. Table 1 is used as an example. The decrease value of the maximum transmit power may include one or more of the following: a decrease of 2 dBm, a decrease of 3 dBm, a decrease of 5 dBm, a decrease of 6 dBm, or a decrease of 8 dBm.

For example, the first bit field includes two bits. A correspondence between a value of the first bit field and the second change value may be as shown in Table 7.

**Table 7**

| Value of the first bit field | Second change value |
|---|---|
| 00 | 0 |
| 01 | Decrease of 3 dBm |
| 10 | Decrease of 6 dBm |

Assuming that the maximum transmit power reported by the terminal device during initial access is 29 dBm, when the maximum transmit power of the terminal device changes to 26 dBm, the maximum transmit power of the terminal device is decreased by 3 dBm, that is, the second change value is a decrease of 3 dBm. Then, the first indication information may be represented by a bit 01. When the maximum transmit power of the terminal device changes to 23 dBm, the maximum transmit power of the terminal device is decreased by 6 dBm, that is, the second change value is a decrease of 6 dBm. Then, the first indication information may be represented by a bit 10. When the maximum transmit power of the terminal device is the same as the maximum transmit power during the initial access, that is, the second change value is 0, the first indication information may be represented by a bit 00.

In some embodiments, if the maximum transmit power of the terminal device is the same as the maximum transmit power during the initial access, a default indication manner may be used, for example, the terminal device does not indicate the second change value to the network device.

Table 7 shows only one correspondence between the value of the first bit field and the second change value, and embodiments of this application are not limited thereto. For example, the first bit field may alternatively include more values to indicate more second change values. For another example, the first bit field may alternatively include fewer values to indicate fewer second change values. In addition, the correspondence between the value of the first bit field and the second change value shown in Table 7 is merely an example. There may alternatively be another correspondence between the value of the first bit field and the second change value. For example, when the value of the first bit field is 00, it indicates that the second change value is a decrease of 3 dBm. When the value of the first bit field is 01, it indicates that the second change value is a decrease of 6 dBm. When the value of the first bit field is 10, it indicates that the second change value is 0.

In some embodiments, if the maximum transmit power capability last reported by the terminal device is used as a reference, the second change value includes a decrease value of a maximum transmit power and/or an increase value of a maximum transmit power.

For example, the first indication information is carried in the first bit field. Different values of the first bit field may be used to indicate different second change values.

A quantity of bits included in the first bit field is not specifically limited in embodiments of this application. The quantity of bits included in the first bit field may be a positive integer greater than or equal to 1. For example, the first bit field may include two bits. For another example, the first bit field may include three bits.

If the second change value is determined based on the maximum transmit power capability last reported by the terminal device, the second change value may include a decrease value of a maximum transmit power and an increase value of the maximum transmit power, and the first bit field may include more bits, that is, more bits may be used to represent the first indication information. Table 1 is used as an example. The second change value may include one or more of the following: a decrease of 2 dBm, a decrease of 3 dBm, a decrease of 5 dBm, a decrease of 6 dBm, a decrease of 8 dBm, an increase of 2 dBm, an increase of 3 dBm, an increase of 5 dBm, an increase of 6 dBm, or an increase of 8 dBm.

For example, the first bit field includes three bits. A correspondence between a value of the first bit field and the second change value may be as shown in Table 8.

**Table 8**

| Value of the first bit field | Second change value |
|---|---|
| 000 | 0 |
| 001 | Decrease of 3 dBm |
| 010 | Decrease of 6 dBm |
| 011 | Increase of 3 dB |
| 100 | Increase of 6 dB |

Assuming that the maximum transmit power last reported by the terminal device is 29 dBm, when the maximum transmit power of the terminal device changes to 26 dBm, the maximum transmit power of the terminal device is decreased by 3 dBm, that is, the second change value is a decrease of 3 dBm. Then, the first indication information may be represented by a bit 001. When the maximum transmit power of the terminal device changes from 29 dBm to 23 dBm, the maximum transmit power of the terminal device is decreased by 6 dBm, that is, the second change value is a decrease of 6 dBm. Then, the first indication information may be represented by a bit 010. When the maximum transmit power of the terminal device is increased from 23 dBm to 26 dBm, the maximum transmit power of the terminal device is increased by 3 dB, that is, the second change value is an increase of 3 dBm. Then, the first indication information may be represented by a bit 011. When the maximum transmit power of the terminal device is increased from 23 dBm to 29 dBm, the maximum transmit power of the terminal device is increased by 6 dBm, that is, the second change value is an increase of 6 dBm. Then, the first indication information may be represented by a bit 100. When the maximum transmit power of the terminal device is the same as the maximum transmit power last reported, that is, the second change value is 0, the first indication information may be represented by a bit 000.

In some embodiments, if the maximum transmit power of the terminal device is the same as the maximum transmit power last reported, a default indication manner may be used, for example, the terminal device does not indicate the second change value to the network device.

Table 8 shows only one correspondence between the value of the first bit field and the second change value, and embodiments of this application are not limited thereto. For example, the first bit field may alternatively include more values to indicate more second change values. For another example, the first bit field may alternatively include fewer values to indicate fewer second change values. In addition, the correspondence between the value of the first bit field and the second change value shown in Table 8 is merely an example. There may alternatively be another correspondence between the value of the first bit field and the second change value. For example, when the value of the first bit field is 000, it indicates that the second change value is a decrease of 3 dBm. When the value of the first bit field is 001, it indicates that the second change value is a decrease of 6 dBm. When the value of the first bit field is 010, it indicates that the second change value is an increase of 3 dBm. When the value of the first bit field is 100, it indicates that the second change value is an increase of 6 dBm. When the value of the first bit field is 101, it indicates that the second change value is 0.

A manner of triggering the first indication information is not specifically limited in embodiments of this application. In an example, the first indication information may be triggered by an event. For example, the terminal device may transmit the first indication information to the network device in response to triggering of a first event. In another example, the first indication information may be triggered periodically. For example, the terminal device may transmit the first indication information to the network device periodically. A trigger condition is set, such that the terminal device may dynamically indicate the maximum transmit power capability to the network device. In this way, the network device can learn the maximum transmit power capability of the terminal device in real time. The following separately describes these two cases.

In some embodiments, the first indication information may be triggered by a first event. The first event may be related to one or more of the following: a change in the maximum transmit power capability, a transmission instant of the first indication information, a trigger condition of a PHR, a first timer, or a second timer.

In some embodiments, the first event may be related to a change in the maximum transmit power capability. The change in the maximum transmit power capability may include one or more of the following: a change in the transmit power class corresponding to the maximum transmit power capability, or a change in the transmit power (or referred to as a maximum transmit power) corresponding to the maximum transmit power capability. The first event may include a change in the transmit power class and/or a change in the maximum transmit power.

For example, when the transmit power class changes, the terminal device may transmit the first indication information to the network device. For another example, when the maximum transmit power changes, the terminal device may transmit the first indication information to the network device. In this way, the network device can learn in time that the maximum transmit power capability of the terminal device changes, so that the network device performs uplink scheduling on the terminal device according to a latest maximum transmit power capability, thereby being conducive to improving accuracy of transmit power scheduling.

In some embodiments, if the transmit power class does not change or the maximum transmit power does not change, the terminal device may not transmit the first indication information to the network device.

The change in the transmit power class may include an increase in the transmit power class and/or a decrease in the transmit power class. The increase in the transmit power class may refer to an increase in the transmit power class from a low power class to a high power class, or the increase in the transmit power class may refer to an increase in a maximum transmit power corresponding to the transmit power class. For example, if the transmit power class of the terminal device changes from PC 3 to PC 2, it indicates that the transmit power class is increased. For another example, if the maximum transmit power corresponding to the transmit power class changes from 26 dBm to 29 dBm, it indicates that the transmit power class is increased. The decrease in the transmit power class may refer to a decrease in the transmit power class from a high power class to a low power class, or the decrease in the transmit power class may refer to a decrease in a maximum transmit power corresponding to the transmit power class. For example, if the transmit power class of the terminal device changes from PC 1.5 to PC 3, it indicates that the transmit power class decreases. For another example, if the maximum transmit power corresponding to the transmit power class changes from 29 dBm to 26 dBm, it indicates that the transmit power class decreases.

In some embodiments, the first event may include an increase in the transmit power class and/or a decrease in the transmit power class. If the first event includes a decrease in the transmit power class, the terminal device may transmit the first indication information to the network device in a case in which the transmit power class decreases. If the first event includes an increase in the transmit power class, the terminal device may transmit the first indication information to the network device in a case in which the transmit power class is increased.

The change in the maximum transmit power includes an increase in the maximum transmit power and/or a decrease in the maximum transmit power. That is, the first event may include an increase in the maximum transmit power and/or a decrease in the maximum transmit power. If the first event includes a decrease in the maximum transmit power, the terminal device may transmit the first indication information to the network device in a case in which the maximum transmit power is reduced. If the first event includes an increase in the maximum transmit power, the terminal device may transmit the first indication information to the network device in a case in which the maximum transmit power is increased.

In some embodiments, the first event may be related to a transmission instant of the first indication information. The transmission instant of the first indication information may be an instant at which the first indication information is last transmitted by the terminal device to the network device. The first event may be related to a transmission time interval of the first indication information. In some embodiments, the first event may include a transmission time interval of the first indication information exceeding a preset threshold. That is, when a time interval between a current instant and an instant at which the first indication information is last transmitted exceeds the preset threshold, the terminal device may transmit the first indication information to the network device. In this way, in a case in which the terminal device does not indicate the maximum transmit power capability to the network device for a long time, the terminal device may transmit updated maximum transmit power capability of the terminal device to the network device periodically.

In some embodiments, the first event may be related to the trigger condition of the PHR. For example, the first event may include the trigger condition of the PHR being met. That is, the terminal device may transmit the first indication information to the network device in a case in which the trigger condition of the PHR is met. In this case, as long as the terminal device transmits a PHR to the network device, the terminal device is required to transmit the first indication information to the network device; or in other words, as long as the terminal device transmits a PHR to the network device, the first indication information is carried in the PHR.

The trigger condition of the PHR is a trigger condition of a PHR in a related technology. The trigger condition of the PHR is not specifically limited in embodiments of this application. For example, the trigger condition of the PHR may include one or more of the following: prohibitPHR-Timer (prohibitPHR-Timer) expires or has expired; a change value of path loss has exceeded dl-PathlossChange dB since last transmission of the PHR; the terminal device obtains an uplink resource for new data transmission; or PHR functionality or parameter is configured or re-configured at the RRC layer, and this configuration or re-configuration does not prohibit the PHR. For example, a value of the timer is re-configured at the RRC layer.

In some embodiments, the first event may be related to a first timer. The first timer may be configured to prevent the terminal device from transmitting the first indication information. The first timer may also be referred to as a prohibit timer or a power class reporting prohibit timer. When the first timer is activated, the terminal device is not allowed to transmit the first indication information to the network device. That is, the first event may include the first timer expiring (or the first timer being not activated). In a case in which the first timer expires or is not activated, the terminal device transmits the first indication information to the network device.

In some embodiments, the first event may be related to a second timer. The second timer may be configured to allow the terminal device to transmit the first indication information. The second timer may also be referred to as an enable timer or a power class reporting enable timer. When the second timer is activated, the terminal device is allowed to transmit the first indication information to the network device. That is, the first event may include the second timer not expiring (or the second timer being activated). In a case in which the second timer does not expire or is activated, the terminal device transmits the first indication information to the network device.

At least one of the first timer or the second timer may be configured by the network device, or may be predefined in a protocol. In some embodiments, at least one of the first timer or the second timer may be activated by the network device.

Only one of the first timer or the second timer may be configured, or both of them may be configured, or neither of them may be configured, which is not specifically limited in embodiments of this application.

A plurality of first events are described above. The plurality of first events may be used individually or in combination with each other. For example, the terminal device may transmit the first indication information to the network device in a case in which the maximum transmit power capability changes and the second timer does not expire.

In some embodiments, the first indication information may alternatively be triggered periodically. The terminal device may transmit the first indication information to the network device periodically. A transmission period of the first indication information may be configured by the network device, or may be configured in a default manner, or may be predefined in a protocol. A transmission period of the first indication information is not specifically limited in embodiments of this application. For example, the transmission period of the first indication information may be in the unit of slots, subframes, or the like. For example, the transmission period is in the unit of subframes. The transmission period of the first indication information may be 10 subframes, 20 subframes, 50 subframes, 100 subframes, or the like. When a reporting period expires, the terminal device is triggered to transmit the first indication information.

It may be learned from the foregoing description that the first indication information may be used to indicate information related to a transmit power class. The following describes the solutions in embodiments of this application in detail with reference to two examples by assuming that the indication information is related to the transmit power class. An example 1 is an example in which the first indication information is carried in a PHR, and an example 2 is an example in which the first indication information is carried in a MAC CE or RRC. It should be noted that the example 1 and the example 2 are merely for ease of understanding this application, and embodiments of this application should not be limited thereto.

### Example 1: The first indication information is carried in a PHR

In a related technology, a PHR can indicate only information such as transmit power headroom of the terminal device and a maximum transmit power currently configurable, but cannot indicate a transmit power class of the terminal device to the network device. Therefore, when a PHR reported by the terminal device changes, the network device cannot determine a reason why a current transmit power changes, for example, whether the change is caused by changes in spatial propagation loss or by a change in a transmit power class of the terminal device.

Therefore, the terminal device may carry the first indication information in the PHR. The first indication information is used to indicate a transmit power class of the terminal device, so that the transmit power class may be indicated to the network device together when the PHR is reported.

The first indication information may be used to indicate a transmit power class or a change value of a transmit power class of the terminal device. The change value of the transmit power class may be a change value of a maximum transmit power corresponding to the transmit power class, that is, the first change value described above.

For example, the first indication information is used to indicate a transmit power class. Assuming that a transmit power class reported by the terminal device includes PC 1.5, PC 2, and PC 3, the first indication information may be represented by two bits. A correspondence between a value of a bit field and a power class may be as shown in Table 3.

For example, the first indication information is used to indicate the first change value of the transmit power class. The first change value may be a change value of the transmit power class of the terminal device relative to the transmit power class reported by the terminal device during initial access, or the first change value may be a change value of the transmit power class of the terminal device relative to the transmit power class last indicated by the terminal device.

For example, the first change value is a change value of the transmit power class of the terminal device relative to the transmit power class reported by the terminal device during initial access. The first indication information may be represented by two bits. A correspondence between a value of the first bit field and a change value of a transmit power class may be as shown in Table 4.

Table 4 is used as an example. Assuming that a power class reported by the terminal device during initial access is PC 1.5, when a transmit power class of the terminal device decreases to PC 2, the transmit power class of the terminal device is decreased by 3 dBm, that is, the first change value is a decrease of 3 dBm. Then, the first indication information may be represented by a bit 01. When the transmit power class of the terminal device decreases to PC 3, the transmit power class of the terminal device is decreased by 6 dBm, that is, the first change value is a decrease of 6 dBm. Then, the first indication information may be represented by a bit 10. When the transmit power class of the terminal device is the same as the transmit power class during the initial access, that is, the first change value is 0, the first indication information may be represented by a bit 00.

In some embodiments, if the transmit power class of the terminal device is the same as the transmit power class during the initial access, a default indication manner may be used, for example, the terminal device does not indicate the first change value to the network device.

For example, the first change value is a change value of the transmit power class of the terminal device relative to the transmit power class last indicated by the terminal device. The first indication information may be represented by three bits. A correspondence between a value of the first bit field and a change value of a transmit power class may be as shown in Table 5.

Table 5 is used as an example. Assuming that the transmit power class last reported by the terminal device is PC 1.5, when the transmit power class of the terminal device decreases to PC 2, the transmit power class of the terminal device is decreased by 3 dBm, that is, the first change value is a decrease of 3 dBm. Then, the first indication information may be represented by a bit 001. When the transmit power class of the terminal device changes from PC 1.5 to PC 3, the transmit power class of the terminal device is decreased by 6 dBm, that is, the first change value is a decrease of 6 dBm. Then, the first indication information may be represented by a bit 010. When the transmit power class of the terminal device is increased from PC 3 to PC 2, the transmit power class of the terminal device is increased by 3 dB, that is, the first change value is an increase of 3 dBm. Then, the first indication information may be represented by a bit 011. When the transmit power class of the terminal device is increased from PC 3 to PC 1.5, the transmit power class of the terminal device is increased by 6 dBm, that is, the first change value is an increase of 6 dBm. Then, the first indication information may be represented by a bit 100. When the transmit power class of the terminal device is the same as the transmit power class last reported, that is, the first change value is 0, the first indication information may be represented by a bit 000.

In some embodiments, if the transmit power class of the terminal device is the same as the transmit power class last indicated, the first indication information may be represented by the bit 000 shown in Table 5, or may be indicated in a default indication manner, for example, the terminal device does not indicate the first change value to the network device.

In some embodiments, the first indication information may be reported periodically or in response to triggering of an event.

When the first indication information is reported periodically, the terminal device may transmit the first indication information to the network device periodically. A transmission period of the first indication information may be configured by the network device, or may be configured in a default manner, or may be predefined in a protocol. A transmission period of the first indication information is not specifically limited in embodiments of this application. For example, the transmission period of the first indication information may be in the unit of slots, subframes, or the like. For example, the transmission period is in the unit of subframes. The transmission period of the first indication information may be 10 subframes, 20 subframes, 50 subframes, 100 subframes, or the like. When a reporting period expires, the terminal device is triggered to transmit the first indication information.

When the first indication information is reported in response to triggering of an event, a trigger event may include one or more of the following:
Event 1: The transmit power class of the terminal device changes;
Event 2: The transmit power class of the terminal device decreases from a high power class to a low power class, or a maximum transmit power corresponding to the transmit power class of the terminal device is reduced;
Event 3: The transmit power class of the terminal device changes from a low power class to a high power class, or a maximum transmit power corresponding to the transmit power class of the terminal device is increased; or
Event 4: A time interval for transmitting the first indication information by the terminal device exceeds the preset threshold, or a time interval between an instant at which the first indication information is last transmitted by the terminal device and a current instant exceeds the preset threshold.

In some embodiments, the trigger event may alternatively include the first timer expiring and/or the second timer not expiring.

The first timer may be configured to prevent the terminal device from transmitting the first indication information. The first timer may also be referred to as a prohibit timer or a power class reporting prohibit timer. When the first timer is activated, the terminal device is not allowed to transmit the first indication information to the network device. That is, the trigger event may include the first timer expiring (or the first timer being not activated). If the trigger event includes the first timer expiring or the first timer being not activated, the terminal device may transmit the first indication information to the network device in a case in which the first timer expires or is not activated.

The second timer may be configured to allow the terminal device to transmit the first indication information. The second timer may also be referred to as an enable timer or a power class reporting enable timer. When the second timer is activated, the terminal device is allowed to transmit the first indication information to the network device. That is, the trigger event may include the second timer not expiring (or the second timer being activated). If the trigger event includes the second timer not expiring or the second timer being activated, the terminal device may transmit the first indication information to the network device in a case in which the second timer does not expire or is activated.

The foregoing describes the trigger condition for transmitting the first indication information by the terminal device, such as periodic triggering or event triggering. In a case in which the foregoing trigger condition is met, the terminal device transmits a PHR and the first indication information to the network device. In addition, for a PHR reporting mechanism in a related technology, there is an independent PHR trigger condition for PHR transmission. In this case, transmission of the first indication information may be performed in the following two manners.

Manner 1: The first indication information is always indicated together with the PHR. For example, during reporting of a PHR, the first indication information is transmitted to the network device together with the PHR. In this case, regardless of whether the terminal device meets the trigger condition of the first indication information, the terminal device carries the first indication information in the PHR. For example, if the terminal device meets the trigger condition of the PHR, but does not meet the trigger condition of the first indication information, the terminal device also carries the first indication information in the PHR when transmitting the PHR.

For example, the trigger condition of the first indication information includes a change in a transmit power class. When the terminal device transmits a PHR, the transmit power class of the terminal device may change or not. In a case in which the transmit power class changes, the terminal device may indicate a change value of the transmit power class to the network device in an explicit indication manner. In a case in which the transmit power class does not change, the terminal device may indicate a change value of the transmit power class to the network device in an implicit indication manner.

Explicit indication is used as an example. Regardless of whether the transmit power class of the terminal device changes, the terminal device may explicitly indicate the transmit power class of the terminal device to the network device. Implicit indication is used as an example. When the transmit power class of the terminal device does not change, a specific value may be used for indication.

Manner 2: The first indication information may be indicated together with the PHR only when the transmit power class changes. Otherwise, the first indication information is not indicated. For example, if the terminal device meets the trigger condition of the PHR, but does not meet the trigger condition of the first indication information, the terminal device may not carry the first indication information in the PHR when transmitting the PHR.

### Example 2: The first indication information is carried in a MAC CE or RRC

In embodiments of this application, the MAC CE may be a dedicated MAC CE, or may be a general MAC CE. In embodiments of this application, the RRC may be dedicated RRC, or may be general RRC. The first indication information is carried in a MAC CE or RRC , so that the first indication information can be transmitted more flexibly.

The first indication information may be used to indicate a transmit power class or a change value of a transmit power class of the terminal device. The change value of the transmit power class may be a change value of a maximum transmit power corresponding to the transmit power class, that is, the first change value described above.

For example, the first indication information is used to indicate a transmit power class. Assuming that a transmit power class reported by the terminal device includes PC 1.5, PC 2, and PC 3, the first indication information may be represented by two bits. A correspondence between a value of a bit field and a power class may be as shown in Table 3.

For example, the first indication information is used to indicate the first change value of the transmit power class. The first change value may be a change value of the transmit power class of the terminal device relative to the transmit power class reported by the terminal device during initial access, or the first change value may be a change value of the transmit power class of the terminal device relative to the transmit power class last indicated by the terminal device.

For example, the first change value is a change value of the transmit power class of the terminal device relative to the transmit power class reported by the terminal device during initial access. The first indication information may be represented by two bits. A correspondence between a value of the first bit field and a change value of a transmit power class may be as shown in Table 4.

Table 4 is used as an example. Assuming that a power class reported by the terminal device during initial access is PC 1.5, when a transmit power class of the terminal device decreases to PC 2, the transmit power class of the terminal device is decreased by 3 dBm, that is, the first change value is a decrease of 3 dBm. Then, the first indication information may be represented by a bit 01. When the transmit power class of the terminal device decreases to PC 3, the transmit power class of the terminal device is decreased by 6 dBm, that is, the first change value is a decrease of 6 dBm. Then, the first indication information may be represented by a bit 10. When the transmit power class of the terminal device is the same as the transmit power class during the initial access, that is, the first change value is 0, the first indication information may be represented by a bit 00.

In some embodiments, if the transmit power class of the terminal device is the same as the transmit power class during the initial access, a default indication manner may be used, for example, the terminal device does not indicate the first change value to the network device.

For example, the first change value is a change value of the transmit power class of the terminal device relative to the transmit power class last indicated by the terminal device. The first indication information may be represented by three bits. A correspondence between a value of the first bit field and a change value of a transmit power class may be as shown in Table 5.

Table 5 is used as an example. Assuming that the transmit power class last reported by the terminal device is PC 1.5, when the transmit power class of the terminal device decreases to PC 2, the transmit power class of the terminal device is decreased by 3 dBm, that is, the first change value is a decrease of 3 dBm. Then, the first indication information may be represented by a bit 001. When the transmit power class of the terminal device changes from PC 1.5 to PC 3, the transmit power class of the terminal device is decreased by 6 dBm, that is, the first change value is a decrease of 6 dBm. Then, the first indication information may be represented by a bit 010. When the transmit power class of the terminal device is increased from PC 3 to PC 2, the transmit power class of the terminal device is increased by 3 dB, that is, the first change value is an increase of 3 dBm. Then, the first indication information may be represented by a bit 011. When the transmit power class of the terminal device is increased from PC 3 to PC 1.5, the transmit power class of the terminal device is increased by 6 dBm, that is, the first change value is an increase of 6 dBm. Then, the first indication information may be represented by a bit 100. When the transmit power class of the terminal device is the same as the transmit power class last reported, that is, the first change value is 0, the first indication information may be represented by a bit 000.

In some embodiments, if the transmit power class of the terminal device is the same as the transmit power class last indicated, the first indication information may be represented by the bit 000 shown in Table 5, or may be indicated in a default indication manner, for example, the terminal device does not indicate the first change value to the network device.

In some embodiments, the first indication information may be transmitted periodically or in response to triggering of an event.

When the first indication information is reported periodically, the terminal device may transmit the first indication information to the network device periodically. A transmission period of the first indication information may be configured by the network device, or may be configured in a default manner, or may be predefined in a protocol. A transmission period of the first indication information is not specifically limited in embodiments of this application. For example, the transmission period of the first indication information may be in the unit of slots, subframes, or the like. For example, the transmission period is in the unit of subframes. The transmission period of the first indication information may be 10 subframes, 20 subframes, 50 subframes, 100 subframes, or the like. When a reporting period expires, the terminal device is triggered to transmit the first indication information.

When the first indication information is reported in response to triggering of an event, a trigger event may include one or more of the following:
Event 1: The transmit power class of the terminal device changes;
Event 2: The transmit power class of the terminal device decreases from a high power class to a low power class, or a maximum transmit power corresponding to the transmit power class of the terminal device is reduced;
Event 3: The transmit power class of the terminal device changes from a low power class to a high power class, or a maximum transmit power corresponding to the transmit power class of the terminal device is increased; or
Event 4: A time interval for transmitting the first indication information by the terminal device exceeds the preset threshold, or a time interval between an instant at which the first indication information is last transmitted by the terminal device and a current instant exceeds the preset threshold.

In some embodiments, the trigger event may alternatively include the first timer expiring and/or the second timer not expiring.

The first timer may be configured to prevent the terminal device from transmitting the first indication information. The first timer may also be referred to as a prohibit timer or a power class reporting prohibit timer. When the first timer is activated, the terminal device is not allowed to transmit the first indication information to the network device. That is, the trigger event may include the first timer expiring (or the first timer being not activated). If the trigger event includes the first timer expiring or the first timer being not activated, the terminal device may transmit the first indication information to the network device in a case in which the first timer expires or is not activated.

The second timer may be configured to allow the terminal device to transmit the first indication information. The second timer may also be referred to as an enable timer or a power class reporting enable timer. When the second timer is activated, the terminal device is allowed to transmit the first indication information to the network device. That is, the trigger event may include the second timer not expiring (or the second timer being activated). If the trigger event includes the second timer not expiring or the second timer being activated, the terminal device may transmit the first indication information to the network device in a case in which the second timer does not expire or is activated.

The method embodiments of this application are described above in detail with reference to FIG. 1 to FIG. 3. Apparatus embodiments of this application are described below in detail with reference to FIG. 4 to FIG. 6. It should be understood that the description of the method embodiments corresponds to the description of the apparatus embodiments, and therefore, for a part that is not described in detail, reference may be made to the foregoing method embodiments.

FIG. 4 is a schematic block diagram of a terminal device according to an embodiment of this application. The terminal device 400 shown in FIG. 4 may be any type of terminal device described above. The terminal device may include a transmitting unit 410.

The transmitting unit 410 is configured to transmit first indication information to a network device, where the first indication information is used to indicate first information, and the first information is related to a maximum transmit power capability of the terminal device.

In some embodiments, the first information is related to one or more of the following: a transmit power class corresponding to the maximum transmit power capability, or a transmit power corresponding to the maximum transmit power capability.

In some embodiments, the first information includes one or more of the following: the transmit power class corresponding to the maximum transmit power capability, a first change value of the transmit power class corresponding to the maximum transmit power capability, the transmit power corresponding to the maximum transmit power capability, or a second change value of the transmit power corresponding to the maximum transmit power capability.

In some embodiments, at least one of the first change value or the second change value is determined based on one or more of the following: a maximum transmit power capability indicated by the terminal device during initial access; or a maximum transmit power capability last indicated by the terminal device.

In some embodiments, the first indication information is triggered by a first event, and the first event is related to one or more of the following: a change in the maximum transmit power capability, a transmission instant of the first indication information, a trigger condition of a PHR, a first timer, or a second timer, where the first timer is configured to prevent the terminal device from transmitting the first indication information, and the second timer is configured to allow the terminal device to transmit the first indication information.

In some embodiments, the change in the maximum transmit power capability includes one or more of the following: a change in the transmit power class corresponding to the maximum transmit power capability, or a change in the transmit power corresponding to the maximum transmit power capability.

In some embodiments, the first event includes one or more of the following: the transmit power corresponding to the maximum transmit power capability changes; the transmit power class corresponding to the maximum transmit power capability changes; a transmission time interval of the first indication information exceeds a preset threshold; the trigger condition of the PHR is met; the first timer expires; or the second timer does not expire.

In some embodiments, the change in the transmit power class includes an increase in the transmit power class and/or a decrease in the transmit power class.

In some embodiments, the first indication information is transmitted in periodically.

In some embodiments, the first indication information is carried in one or more of the following: a PHR, a MAC CE, or RRC.

In some embodiments, the first indication information is carried in a first bit field.

In some embodiments, there is a one-to-one correspondence between a value of the first bit field and the first information, and the first information includes one or more of the following: the transmit power class corresponding to the maximum transmit power capability, a first change value of the transmit power class corresponding to the maximum transmit power capability, the transmit power corresponding to the maximum transmit power capability, or a second change value of the transmit power corresponding to the maximum transmit power capability.

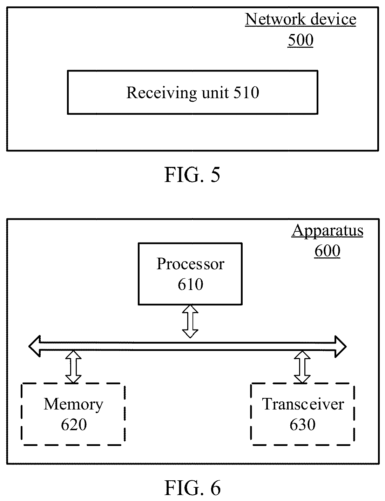

FIG. 5 is a schematic block diagram of a network device according to an embodiment of this application. The network device 500 shown in FIG. 5 may be any type of network device described above. The network device may include a receiving unit 510.

The receiving unit 510 is configured to receive first indication information transmitted by a terminal device, where the first indication information is used to indicate first information, and the first information is related to a transmit power class of the terminal device.

In some embodiments, the first information is related to one or more of following: a transmit power class corresponding to a maximum transmit power capability, or a transmit power corresponding to a maximum transmit power capability.

In some embodiments, the first information includes one or more of the following: a transmit power class corresponding to a maximum transmit power capability, a first change value of a transmit power class corresponding to a maximum transmit power capability, a transmit power corresponding to a maximum transmit power capability, or a second change value of a transmit power corresponding to a maximum transmit power capability.

In some embodiments, at least one of the first change value or the second change value is determined based on one or more of the following: a maximum transmit power capability indicated by the terminal device during initial access; or a maximum transmit power capability last indicated by the terminal device.

In some embodiments, the first indication information is triggered by a first event, and the first event is related to one or more of the following: a change in a maximum transmit power capability, a transmission instant of the first indication information, a trigger condition of a PHR, a first timer, or a second timer, where the first timer is configured to prevent the terminal device from transmitting the first indication information, and the second timer is configured to allow the terminal device to transmit the first indication information.

In some embodiments, the change in the maximum transmit power capability includes one or more of the following: a change in a transmit power class corresponding to the maximum transmit power capability, or a change in a transmit power corresponding to the maximum transmit power capability.

In some embodiments, the first event includes one or more of the following: the transmit power corresponding to the maximum transmit power capability changes; the transmit power class corresponding to the maximum transmit power capability changes; a transmission time interval of the first indication information exceeds a preset threshold; the trigger condition of the PHR is met; the first timer expires; or the second timer does not expire.

In some embodiments, the change in the transmit power class includes an increase in the transmit power class and/or a decrease in the transmit power class.

In some embodiments, the first indication information is transmitted in periodically.

In some embodiments, the first indication information is carried in one or more of the following: a PHR, a MAC CE, or RRC.

In some embodiments, the first indication information is carried in a first bit field.

In some embodiments, there is a one-to-one correspondence between a value of the first bit field and the first information, and the first information includes one or more of the following: a transmit power class corresponding to a maximum transmit power capability, a first change value of a transmit power class corresponding to a maximum transmit power capability, a transmit power corresponding to a maximum transmit power capability, or a second change value of a transmit power corresponding to a maximum transmit power capability.

FIG. 6 is a schematic structural diagram of an apparatus according to an embodiment of this application. Dashed lines in FIG. 6 indicate that the unit or module is optional. The apparatus 600 may be configured to implement the methods described in the foregoing method embodiments. The apparatus 600 may be a chip, a terminal device, or a network device.

The apparatus 600 may include one or more processors 610. The processor 610 may support the apparatus 600 in implementing the methods described in the foregoing method embodiments. The processor 610 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 600 may further include one or more memories 620. The memory 620 stores a program that may be executed by the processor 610 to cause the processor 610 to perform the methods described in the foregoing method embodiments. The memory 620 may be separate from the processor 610 or may be integrated into the processor 610.

The apparatus 600 may further include a transceiver 630. The processor 610 may communicate with another device or chip through the transceiver 630. For example, the processor 610 may transmit data to and receive data from the another device or chip through the transceiver 630.

An embodiment of this application further provides a computer-readable storage medium for storing a program. The computer-readable storage medium may be applied to the terminal or the network device provided in the embodiments of this application, and the program causes the computer to execute the method executed by the terminal or the network device in the embodiments of this application.

An embodiment of this application further provides a computer program product. The computer program product includes a program. The computer program product may be applied to the terminal or the network device provided in the embodiments of this application, and the program causes a computer to perform the methods performed by the terminal or the network device in various embodiments of this application.

An embodiment of this application further provides a computer program. The computer program may be applied to the terminal or the network device provided in embodiments of this application, and the computer program causes a computer to execute the methods performed by the terminal or the network device in various embodiments of this application.

It should be understood that, in embodiments of this application, "B that is corresponding to A" means that B is associated with A, and B may be determined based on A. However, it should be further understood that determining B according to A does not mean determining B according to A only, and may further determine B according to A and/or other information.

It should be understood that, in this specification, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

It should be understood that, in embodiments of this application, sequence numbers of the foregoing processes do not mean execution sequences. The execution sequences of the processes should be determined based on functions and internal logic of the processes, and should not be construed as any limitation on the implementation processes of the embodiments of this application.

In the several embodiments provided in this application, it should be understood that the disclosed system, apparatus, and method may be implemented in another manner. For example, the apparatus embodiments described above are merely examples. For example, the unit division is merely logical function division and may be other division in actual implementation. For example, a plurality of units or components may be combined or integrated into another system, or some features may be ignored or not executed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected depending on actual requirements to achieve the objectives of the solutions in the embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state drive (solid state drive, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A wireless communication method, comprising:
transmitting, by a terminal device, first indication information to a network device, wherein the first indication information is used to indicate first information, and the first information is related to a maximum transmit power capability of the terminal device.

2. The method according to claim 1, wherein the first information is related to one or more of following: a transmit power class corresponding to the maximum transmit power capability, or a transmit power corresponding to the maximum transmit power capability.

3. The method according to claim 2, wherein the first information comprises one or more of following: the transmit power class corresponding to the maximum transmit power capability, a first change value of the transmit power class corresponding to the maximum transmit power capability, the transmit power corresponding to the maximum transmit power capability, or a second change value of the transmit power corresponding to the maximum transmit power capability.

4. The method according to claim 3, wherein at least one of the first change value or the second change value is determined based on one or more of following:
a maximum transmit power capability indicated by the terminal device during initial access; or
a maximum transmit power capability last indicated by the terminal device.

5. The method according to any one of claims 1 to 4, wherein the first indication information is triggered by a first event, and the first event is related to one or more of following: a change in the maximum transmit power capability, a transmission instant of the first indication information, a trigger condition of a power headroom report PHR, a first timer, or a second timer,
wherein the first timer is configured to prevent the terminal device from transmitting the first indication information, and the second timer is configured to allow the terminal device to transmit the first indication information.

6. The method according to claim 5, wherein the change in the maximum transmit power capability comprises one or more of following: a change in a transmit power class corresponding to the maximum transmit power capability, or a change in a transmit power corresponding to the maximum transmit power capability.

7. The method according to claim 6, wherein the first event comprises one or more of following:
the transmit power corresponding to the maximum transmit power capability changes;
the transmit power class corresponding to the maximum transmit power capability changes;
a transmission time interval of the first indication information exceeds a preset threshold;
the trigger condition of the PHR is met;
the first timer expires; or
the second timer does not expire.

8. The method according to claim 7, wherein the change in the transmit power class comprises an increase in the transmit power class and/or a decrease in the transmit power class.

9. The method according to any one of claims 1 to 8, wherein the first indication information is transmitted periodically.

10. The method according to any one of claims 1 to 9, wherein the first indication information is carried in one or more of following: a PHR, a medium access control control element MAC CE, or radio resource control RRC.

11. The method according to any one of claims 1 to 10, wherein the first indication information is carried in a first bit field.

12. The method according to claim 11, wherein there is a one-to-one correspondence between a value of the first bit field and the first information, and the first information comprises one or more of following: a transmit power class corresponding to the maximum transmit power capability, a first change value of a transmit power class corresponding to the maximum transmit power capability, a transmit power corresponding to the maximum transmit power capability, or a second change value of a transmit power corresponding to the maximum transmit power capability.

13. A wireless communication method, comprising:
receiving, by a network device, first indication information transmitted by a terminal device, wherein the first indication information is used to indicate first information, and the first information is related to a transmit power class of the terminal device.

14. The method according to claim 13, wherein the first information is related to one or more of following: a transmit power class corresponding to a maximum transmit power capability, or a transmit power corresponding to a maximum transmit power capability.

15. The method according to claim 14, wherein the first information comprises one or more of following: a transmit power class corresponding to a maximum transmit power capability, a first change value of a transmit power class corresponding to a maximum transmit power capability, a transmit power corresponding to a maximum transmit power capability, or a second change value of a transmit power corresponding to a maximum transmit power capability.

16. The method according to claim 15, wherein at least one of the first change value or the second change value is determined based on one or more of following:
a maximum transmit power capability indicated by the terminal device during initial access; or
a maximum transmit power capability last indicated by the terminal device.

17. The method according to any one of claims 13 to 16, wherein the first indication information is triggered by a first event, and the first event is related to one or more of following: a change in a maximum transmit power capability, a transmission instant of the first indication information, a trigger condition of a power headroom report PHR, a first timer, or a second timer,
wherein the first timer is configured to prevent the terminal device from transmitting the first indication information, and the second timer is configured to allow the terminal device to transmit the first indication information.

18. The method according to claim 17, wherein the change in the maximum transmit power capability comprises one or more of following: a change in a transmit power class corresponding to the maximum transmit power capability, or a change in a transmit power corresponding to the maximum transmit power capability.

19. The method according to claim 18, wherein the first event comprises one or more of following:
the transmit power corresponding to the maximum transmit power capability changes;
the transmit power class corresponding to the maximum transmit power capability changes;
a transmission time interval of the first indication information exceeds a preset threshold;
the trigger condition of the PHR is met;
the first timer expires; or
the second timer does not expire.

20. The method according to claim 19, wherein the change in the transmit power class comprises an increase in the transmit power class and/or a decrease in the transmit power class.

21. The method according to any one of claims 13 to 20, wherein the first indication information is transmitted periodically.

22. The method according to any one of claims 13 to 21, wherein the first indication information is carried in one or more of following: a PHR, a medium access control control element MAC CE, or radio resource control RRC.

23. The method according to any one of claims 13 to 22, wherein the first indication information is carried in a first bit field.

24. The method according to claim 23, wherein there is a one-to-one correspondence between a value of the first bit field and the first information, and the first information comprises one or more of following: a transmit power class corresponding to a maximum transmit power capability, a first change value of a transmit power class corresponding to a maximum transmit power capability, a transmit power corresponding to a maximum transmit power capability, or a second change value of a transmit power corresponding to a maximum transmit power capability.

25. A terminal device, comprising:
a transmitting unit, configured to transmit first indication information to a network device, wherein the first indication information is used to indicate first information, and the first information is related to a maximum transmit power capability of the terminal device.

26. The terminal device according to claim 25, wherein the first information is related to one or more of following: a transmit power class corresponding to the maximum transmit power capability, or a transmit power corresponding to the maximum transmit power capability.

27. The terminal device according to claim 26, wherein the first information comprises one or more of following: the transmit power class corresponding to the maximum transmit power capability, a first change value of the transmit power class corresponding to the maximum transmit power capability, the transmit power corresponding to the maximum transmit power capability, or a second change value of the transmit power corresponding to the maximum transmit power capability.

28. The terminal device according to claim 27, wherein at least one of the first change value or the second change value is determined based on one or more of following:
a maximum transmit power capability indicated by the terminal device during initial access; or
a maximum transmit power capability last indicated by the terminal device.

29. The terminal device according to any one of claims 25 to 28, wherein the first indication information is triggered by a first event, and the first event is related to one or more of following: a change in the maximum transmit power capability, a transmission instant of the first indication information, a trigger condition of a power headroom report PHR, a first timer, or a second timer,
wherein the first timer is configured to prevent the terminal device from transmitting the first indication information, and the second timer is configured to allow the terminal device to transmit the first indication information.

30. The terminal device according to claim 29, wherein the change in the maximum transmit power capability comprises one or more of following: a change in a transmit power class corresponding to the maximum transmit power capability, or a change in a transmit power corresponding to the maximum transmit power capability.

31. The terminal device according to claim 30, wherein the first event comprises one or more of following:
the transmit power corresponding to the maximum transmit power capability changes;
the transmit power class corresponding to the maximum transmit power capability changes;
a transmission time interval of the first indication information exceeds a preset threshold;
the trigger condition of the PHR is met;
the first timer expires; or
the second timer does not expire.

32. The terminal device according to claim 31, wherein the change in the transmit power class comprises an increase in the transmit power class and/or a decrease in the transmit power class.

33. The terminal device according to any one of claims 25 to 32, wherein the first indication information is transmitted periodically.

34. The terminal device according to any one of claims 25 to 33, wherein the first indication information is carried in one or more of following: a PHR, a medium access control control element MAC CE, or radio resource control RRC.

35. The terminal device according to any one of claims 25 to 34, wherein the first indication information is carried in a first bit field.

36. The terminal device according to claim 35, wherein there is a one-to-one correspondence between a value of the first bit field and the first information, and the first information comprises one or more of following: a transmit power class corresponding to the maximum transmit power capability, a first change value of a transmit power class corresponding to the maximum transmit power capability, a transmit power corresponding to the maximum transmit power capability, or a second change value of a transmit power corresponding to the maximum transmit power capability.

37. A network device, comprising:
a receiving unit, configured to receive first indication information transmitted by a terminal device, wherein the first indication information is used to indicate first information, and the first information is related to a transmit power class of the terminal device.

38. The network device according to claim 37, wherein the first information is related to one or more of following: a transmit power class corresponding to a maximum transmit power capability, or a transmit power corresponding to a maximum transmit power capability.

39. The network device according to claim 38, wherein the first information comprises one or more of following: the transmit power class corresponding to the maximum transmit power capability, a first change value of the transmit power class corresponding to the maximum transmit power capability, the transmit power corresponding to the maximum transmit power capability, or a second change value of the transmit power corresponding to the maximum transmit power capability.

40. The network device according to claim 39, wherein at least one of the first change value or the second change value is determined based on one or more of following:
a maximum transmit power capability indicated by the terminal device during initial access; or
a maximum transmit power capability last indicated by the terminal device.

41. The network device according to any one of claims 37 to 40, wherein the first indication information is triggered by a first event, and the first event is related to one or more of following: a change in a maximum transmit power capability, a transmission instant of the first indication information, a trigger condition of a power headroom report PHR, a first timer, or a second timer,
wherein the first timer is configured to prevent the terminal device from transmitting the first indication information, and the second timer is configured to allow the terminal device to transmit the first indication information.

42. The network device according to claim 41, wherein the change in the maximum transmit power capability comprises one or more of following: a change in a transmit power class corresponding to the maximum transmit power capability, or a change in a transmit power corresponding to the maximum transmit power capability.

43. The network device according to claim 42, wherein the first event comprises one or more of following:
the transmit power corresponding to the maximum transmit power capability changes;
the transmit power class corresponding to the maximum transmit power capability changes;
a transmission time interval of the first indication information exceeds a preset threshold;
the trigger condition of the PHR is met;
the first timer expires; or
the second timer does not expire.

44. The network device according to claim 43, wherein the change in the transmit power class comprises an increase in the transmit power class and/or a decrease in the transmit power class.

45. The network device according to any one of claims 37 to 44, wherein the first indication information is transmitted periodically.

46. The network device according to any one of claims 37 to 45, wherein the first indication information is carried in one or more of following: a PHR, a medium access control control element MAC CE, or radio resource control RRC.

47. The network device according to any one of claims 37 to 46, wherein the first indication information is carried in a first bit field.

48. The network device according to claim 47, wherein there is a one-to-one correspondence between a value of the first bit field and the first information, and the first information comprises one or more of following: a transmit power class corresponding to a maximum transmit power capability, a first change value of a transmit power class corresponding to a maximum transmit power capability, a transmit power corresponding to a maximum transmit power capability, or a second change value of a transmit power corresponding to a maximum transmit power capability.

49. A terminal device, comprising a memory, a processor, and a communications interface, wherein the memory is configured to store a program, and the processor is configured to invoke the program in the memory, to cause the terminal device to execute the method according to any one of claims 1 to 12.

50. A network device, comprising a memory, a processor, and a communications interface, wherein the memory is configured to store a program, and the processor is configured to invoke the program in the memory, to cause the network device to execute the method according to any one of claims 13 to 24.

51. An apparatus, comprising a processor, configured to invoke a program from a memory to execute the method according to any one of claims 1 to 12.

52. An apparatus, comprising a processor, configured to invoke a program from a memory to execute the method according to any one of claims 13 to 24.

53. A chip, comprising a processor, configured to invoke a program from a memory to cause a device installed with the chip to execute the method according to any one of claims 1 to 12.

54. A chip, comprising a processor, configured to invoke a program from a memory to cause a device installed with the chip to execute the method according to any one of claims 13 to 24.

55. A computer-readable storage medium, wherein the computer-readable storage medium stores a program, and the program causes a computer to execute the method according to any one of claims 1 to 12.

56. A computer-readable storage medium, wherein the computer-readable storage medium stores a program, and the program causes a computer to execute the method according to any one of claims 13 to 24.

57. A computer program product, comprising a program, wherein the program causes a computer to execute the method according to any one of claims 1 to 12.

58. A computer program product, comprising a program, wherein the program causes a computer to execute the method according to any one of claims 13 to 24.

59. A computer program, wherein the computer program causes a computer to execute the method according to any one of claims 1 to 12.

60. A computer program, wherein the computer program causes a computer to execute the method according to any one of claims 13 to 24.
